# EUROPÄISCHE PATENTSCHRIFT

(11) **EP 2 702 301 B1**
(45) Veröffentlichungstag und Bekanntmachung des Hinweises auf die Patenterteilung: **12.08.2015**
(21) Anmeldenummer: 12700976.9
(22) Anmeldetag: 24.01.2012
(51) Int. Cl.: F16J 15/08

(54) **FLACHDICHTUNG MIT TOLERANZVERTRÄGLICHER FIXIERUNG**
FLAT SEAL WITH TOLERANCE-COMPATIBLE FIXING
JOINT D'ÉTANCHÉITÉ PLAT, À FIXATION COMPATIBLE AVEC UNE TOLÉRANCE

(30) Priorität: 27.04.2011 DE 102011017612
(43) Veröffentlichungstag der Anmeldung: 05.03.2014
(73) Patentinhaber: Federal-Mogul Sealing Systems GmbH, 57562 Herdorf (DE)
(72) Erfinder: GADOMSKI, Bartosch, 51399 Burscheid (DE); SZELE, Erika, 51399 Burscheid (DE)
(74) Vertreter: Becker Kurig Straus
(86) Internationale Anmeldenummer: PCT/EP2012/051001
(87) Internationale Veröffentlichungsnummer: WO 2012/146400

(56) Entgegenhaltungen:
- DE-A1- 10 022 172
- DE-U1-202008 003 428

## Beschreibung

Die Erfindung betrifft eine metallische Flachdichtung mit einer verbesserten Fixierung an Aufnahmeelementen, die gegenüber Bauteiltoleranzen verträglich ist bzw. die eine Verschiebbarkeit zum Ausgleich von Bauteiltoleranzen gewährleistet. Weiterhin betrifft sie eine Flachdichtung, bei der die Klemmwirkung der Fixieraussparung für das Aufnahmeelement von zumindest dem Rand des Dichtungsdurchgangs weitgehend entkoppelt ist. Die Fixieraussparung kann bei der Erfindung näher an dem Dichtungsdurchgang angeordnet sein als bei herkömmlichen Klemmlöchern.

Um die Montage einer Metallsickendichtung in der Serienfertigung zu erleichtern, wird eine Lösung benötigt, um die Dichtung auch unter Berücksichtigung aller Toleranzen verliersicher an einem Dichtflansch zu montieren. Bekannt sind Dichtungen, die mit Zentrierlöchern zur Aufnahme von Zentrierelementen versehen sind. Die Zentrierlöcher sind dabei so ausgelegt, dass die Dichtung mittels Klemmkräften an den Zentrierelementen gehalten wird. Die am häufigsten eingesetzt Variante sind Klemmlöcher, die sich dadurch auszeichnen, dass ihre wirksamen Durchmesser kleiner als die die entsprechenden Außendurchmesser des jeweiligen Partners (Bolzen, Schrauben und dergleichen) sind. Die bei der Montage durch Einführen des größeren Klemmpartners entstehende zumindest teilelastische Verformung am Rand des Klemmlochs erzeugt die erforderliche Klemmkraft.

Diese bekannten Klemmlöcher haben allerdings den Nachteil, dass ein Ausgleich von Toleranzen nicht oder nur in sehr geringem Umfang möglich ist. Insbesondere ist das bisherige Design der Klemmung nicht bei Langlöchern einsetzbar. Langlöcher wären aber für die Positionierung des Bauteils, insbesondere unter Berücksichtigung der Toleranzen, sehr nützlich. In besonderen Fällen ist weiterhin die Fixierung des Bauteils an mindestens zwei Stellen möglich. Dies kann zur statischen Überbestimmung führen und erschwert eine Montage im Bereich der Toleranzgrenzen oder macht sie sogar unmöglich.
Aus DE 10022172 ist eine Flachdichtung bekannt, die mit einem aus der Blechlage herausgeformten Zentrierelement im Bereich eines Durchgangslochs versehen ist.

Es ist daher die Aufgabe der Erfindung, eine Dichtung bereitzustellen, welche eine Klemmung wie bei den bekannten Dichtungen sicherstellt, dabei gleichzeitig aber erlaubt, Bauteiltoleranzen auszugleichen.

Gemäß einer ersten Ausführungsform wird eine Flachdichtung bereitgestellt, umfassend:
- mindestens eine Blechlage, die mindestens eine Durchgangsöffnung aufweist;
- mindestens eine im Wesentlichen T-förmige Fixieraussparung für ein Zentrierelement, wobei die Breite innerhalb des Stamms der T-Form geringer als die entsprechende Außenbreite des Zentrierelements ist, und wobei die Länge der Fixieraussparung in Richtung des Stamms der T-Form größer als die entsprechende Außenbreite des Zentrierelements ist; und
- mindestens je eine Aussparung seitlich des Stamms der T-Form;
wobei die Fixieraussparung mit den Armen der T-Form dem Rand der mindestens einen Durchgangsöffnung zugewandt ist.

Damit wird eine Metalldichtung bereitgestellt, welche die Montage in der Serienfertigung erleichtert. Mittels Zentrierelementen kann die Dichtung durch Form- und/oder Kraftschluss an dem Dichtflansch verliersicher befestigt werden. Die spezielle Form der Fixieraussparung ermöglicht das Klemmen des Zentrierelements, wobei durch die Länge des Stamms der T-Form eine Langloch-Funktionalität erhalten bleibt. Innerhalb des so gebildeten Langloches kann das Zentrierelement in einer Achse verschoben werden, um Bauteiltoleranzen auszugleichen.

Weiterhin wird durch die Arme der T-Form erreicht, dass der Klemmbereich vom restlichen Bereich der Dichtung, insbesondere in der Umgebung der Durchgangsöffnung, entkoppelt wird. In den somit gebildeten Klemmlaschen wird zusätzlich die Steifigkeit in Richtung der Blechlage verringert, indem seitlich des Stamms der T-Form Aussparungen vorgesehen werden.

Die Breite innerhalb des Stamms der T-Form ist geringfügig kleiner als die des aufzunehmenden Zentrierelements, während die Länge längs des Stamms entsprechend größer als die des Zentrierelements gewählt wird, abhängig von den zu erwartenden Bauteiltoleranzen in dieser Richtung. Da innerhalb der Richtung senkrecht zum Stamm der T-Form nur eine geringfügige Anpassung möglich ist, wird bevorzugt diese Richtung (also längs der Arme der T-Form) parallel zu der Richtung der geringsten zu erwartenden Bauteiltoleranzen gelegt.

Gemäß einer Ausführungsform ist der Abstand der mindestens einen Fixieraussparung von der Durchgangsöffnung nicht größer als die Breite innerhalb des Stamms der T-Form.

Durch die erfindungsgemäße Entkopplung der auftretenden Biegung im Bereich der Klemmlaschen kann die Fixieraussparung näher an den Rand der Durchgangsöffnung rücken.

Gemäß einer Ausführungsform weist die Fixieraussparung an den Armen der T-Form eine Wellen- oder Zickzackstruktur auf.

Diese Ausführungsform ist besonders für nach außen hin geschlossene Varianten der Fixieraussparung vorteilhaft, kann aber auch mit allen anderen, insbesondere nach außen offenen, Ausführungen der Fixieraussparung kombiniert werden. Im Bereich der Wellen- oder Zickzackstruktur an den Armen wird gezielt die Steifigkeit in Richtung der Blechlage herabgesetzt, um eine elastische Klemmwirkung zu erzielen.

Gemäß einer Ausführungsform ist die Fixieraussparung nach außen geschlossen ist, und die mindestens eine Fixieraussparung weist am Fuß der T-Form zwei weitere Arme auf. Dadurch entsteht eine im Wesentlichen H-förmige Fixieraussparung (relativ zur T-Form liegendes H). Die Klemmlaschen seitlich des Stamms bzw. im Falle der H-förmigen Fixieraussparung des Querstrichs werden dadurch als zungenförmige Laschen stärker herausgebildet bzw. beweglicher gestaltet. Im Vergleich zur T-förmigen Ausführung kann bei jeweils geschlossenen Fixieraussparungen dadurch auch im von der Durchgangsöffnung abgewandten Bereich der Blechlage eine Entkopplung von der Klemm-Biegung erzielt werden.

Gemäß einer Ausführungsform ist die mindestens eine Fixieraussparung am Fuß der T-Form nach außen offen.

Dadurch kann beispielsweise eine erleichterte Einführung des Fixierelements erreicht werden, dass bei einer derartigen Ausführungsform zusätzlich zur Einführung senkrecht zur Blechlage das Fixierelement auch seitlich eingeschoben werden kann.

Gemäß einer Ausführungsform umfasst die Flachdichtung mindestens zwei der Fixieraussparungen, wobei die Stämme der jeweiligen T-Form parallel zueinander angeordnet sind.

In Fällen, in denen eine Fixierung an mindestens zwei Stellen erforderlich ist, kann diese Ausführungsform zum Einsatz kommen. Dabei wird bevorzugt die Ausrichtung der Stämme der T-Form parallel zur Richtung der größten erwarteten Bauteiltoleranzen gewählt.

Gemäß einer Ausführungsform sind die Seite der Arme der jeweiligen T-Form von mindestens zwei der Fixieraussparungen entgegengesetzt ausgerichtet.

Gemäß einer Ausführungsform umfasst die Flachdichtung weiter eine Dichtsicke, welche die mindestens eine Durchgangsöffnung geschlossen umgibt.

Kurze Beschreibung der Zeichnung
- Fig. 1: zeigt eine erste Ausführungsform der vorliegenden Erfindung in einem dreidimensionalen Ausschnitt;
- Fig. 2: zeigt die Ausführungsform von Fig. 1 mit eingesetzter Passhülse;
- Fig. 3: zeigt eine zweite Ausführungsform der vorliegenden Erfindung in einem dreidimensionalen Ausschnitt;
- Fig. 4: zeigt eine dritte Ausführungsform der vorliegenden Erfindung in einem dreidimensionalen Ausschnitt;
- Fig. 5: zeigt einen größeren Ausschnitt einer Dichtung gemäß einer Ausführungsform der Erfindung; und
- Fig. 6: illustriert die Verschiebbarkeit eines Aufnahmeelements in der Fixieraussparung.

### Detaillierte Beschreibung der Erfindung

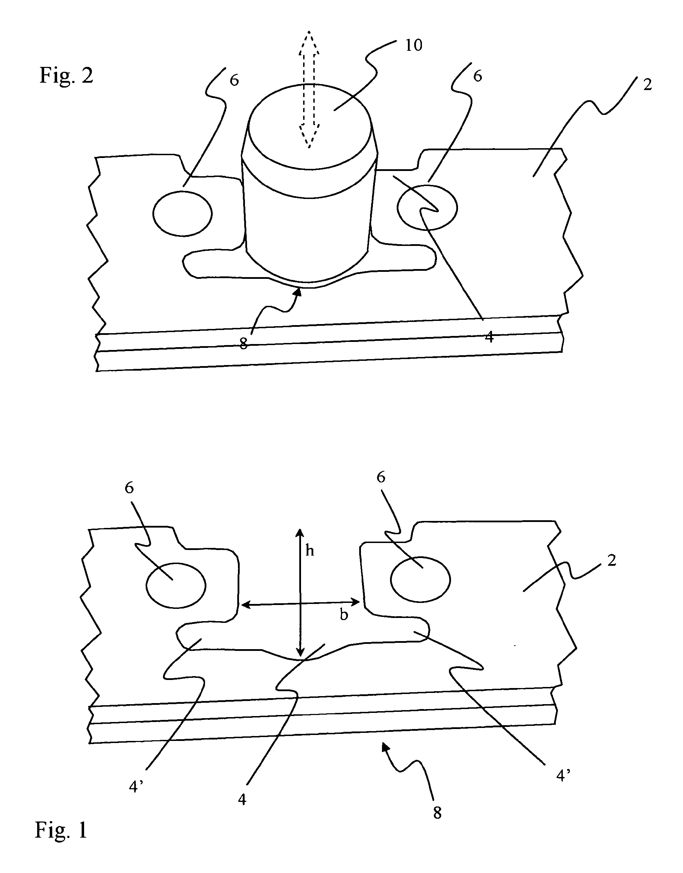

In Figur 1 ist eine erste Ausführungsform gemäß der Erfindung gezeigt, wobei hier nur ein Ausschnitt der Dichtung gezeigt ist, welcher eine der erfindungsgemäßen Fixierungen/Zentrierungen enthält. Eine Dichtung umfasst mindestens eine Blechlage 2. Die Blechlage 2 umfasst mindestens eine Durchgangsöffnung (die bei dem hier gezeigten Ausschnitt unten liegt), die von einer Sicke 8 umgeben ist.

In der Blechlage 2 befindet sich eine Fixieraussparung 4 für ein Zentrierelement (hier nicht gezeigt ist). Die hier gezeigte Fixieraussparung 4 gemäß einer ersten Ausführungsform weist im Wesentlichen eine T-Form auf. Dabei ist die Breite *b* innerhalb des Stamms der T-Form etwas geringer als die entsprechende Außenbreite des nicht gezeigten Zentrierelements. Die Länge *h* der Fixieraussparung in Richtung des Stamms der T-Form ist größer als die entsprechende Außenbreite des Zentrierelements, so dass ein (z.B. kreiszylindrisches Zentrierelement mit einem Durchmesser, der geringfügig größer ist als *b*) Zentrierelement in Richtung der Länge *h* innerhalb der Fixieraussparung 4 verschoben werden kann (und zwar um die Differenz zwischen Länge *h* und der entsprechenden Abmessung des Zentrierelements).

Seitlich des Stamms der T-Form sind Aussparungen 6 vorgesehen. Diese verursachen eine lokale Schwächung der Steifigkeit der Blechlage 2 in Blechrichtung, um so eine elastische Klemmwirkung gegenüber einem eingesetzten Zentrierelement zu bewirken. Die Form dieser Aussparungen 6 muss nicht zwingend rund sein, auch wenn diese bevorzugt ist.

Die Fixieraussparung 4 weist weiterhin die Arme 4' der T-Form auf. Diese Arme 4' bewirken eine Entkopplung der Klemmwirkung der seitlich vom T-Stamm gebildeten Klemmzungen von dem Bereich der Sicke 8. Die erfindungsgemäße Fixieraussparung 4 bewirkt dadurch, dass im Wesentlichen alle durch das Klemmen auftretenden Verformungen von dem Bereich der Sicke 8 ferngehalten werden können. Dadurch kann die erfindungsgemäße Fixieraussparung 4 näher an den Bereich der Sicke 8, allgemein den Rand der Durchgangsöffnung, heranrücken als bei herkömmlichen Klemmlöchern ohne Entkopplung.

In Figur 2 ist eine Fixieraussparung wie in Figur 1 gezeigt, hier mit eingesetztem Zentrier- /Fixier-Element 10. Die Dichtung und das Zentrierelement 10 können relativ zu einander in Richtung des gestrichelten Pfeils bewegt werden. In der dazu senkrechten Achse ist durch die Klemmwirkung, die von den seitlichen Klemmzungen auf das Zentrierelement 10 aufgebracht wird, die Dichtung auf dem Zentrierelement 10 fixiert.

In dem hier gezeigten Beispiel ist das Zentrierelement 10 kreiszylindrisch, was die bevorzugte Form darstellt. Allerdings ist die Erfindung auch für andere Formen von Zentrierelementen geeignet. Mehreckige, z.B. achteckige, sechseckige oder selbst rechteckige Zentrierelemente sind möglich, vorausgesetzt, sie können sicher in der Fixieraussparung eingeklemmt und in der angedeuteten Richtung verschoben werden.

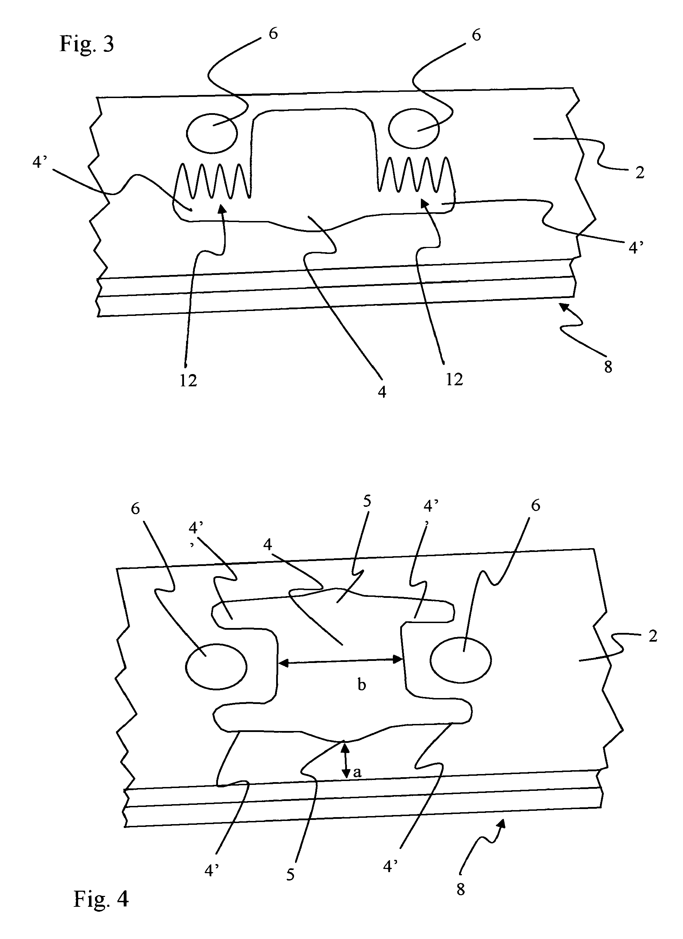

In Figur 3 ist eine alternative Ausführungsform der erfindungsgemäßen Dichtung gezeigt. Hier ist die im Wesentlichen T-förmige Fixieraussparung 4 geschlossen ausgebildet. Um die Elastizität im Bereich der T-Arme 4' zu erhöhen, sind zickzack- bzw. wellenförmige Strukturen 12 vorgesehen.

In Figur 4 ist eine weitere alternative Ausführungsform der erfindungsgemäßen Dichtung gezeigt. Auch hier ist die im Wesentlichen T-förmige Fixieraussparung 4 geschlossen ausgebildet. Jedoch sind hier zusätzlich zwei weitere Arme 4" an der Basis der T-Form vorgesehen, so dass sich eine im Wesentlichen (in Relation zu der T-Form der Figuren 1-3 liegend angeordnete) H-förmige Fixieraussparung 4 ergibt. Durch die zusätzlichen Arme 4" wird die Entkopplung der Klemmwirkung von den Bereichen außerhalb der Klemmzungen verbessert bzw. auch auf den der Durchgangsöffnung abgewandten Bereich erweitert.

An dieser Figur 4 kann auch ein weiteres optionales Merkmal der erfindungsgemäßen Fixieraussparung 4 gezeigt werden. Die Entfernung *a* des tiefsten/nächsten Punktes der Fixieraussparung 4 in Bezug auf die Durchgangsöffnung/Sicke 8 ist kleiner als die Breite *b* der Fixieraussparung 4 im Stamm der T-Form. Durch die Entkopplung der Klemmwirkung kann die Fixieraussparung vergleichsweise nahe an die Durchgangsöffnung/Sicke 8 heranrücken.

Optional können Bereiche 5 an den Endpunkten (bzw. ein solcher Bereich 5 bei einer einseitig offenen Fixieraussparung) vorgesehen werden, die verglichen mit den Armen 4' bzw. 4" noch weiter ausgespart sind. Im in Figur 4 gezeigten Fall sind diese Bereiche 5 rund ausgebildet, um ein (nicht gezeigtes) kreiszylindrisches Zentrierelement aufzunehmen. Bei anders geformten Zentrierelementen kann die Form der Bereiche 5 entsprechend variiert werden. Durch die Bereiche 5 kann der Bewegungsspielraum des Zentrierelements in Richtung des T-Stamms (bzw. H-Querstrichs) noch etwas vergrößert werden, ohne die anderen Elemente der Fixieraussparung anders gestalten zu müssen.

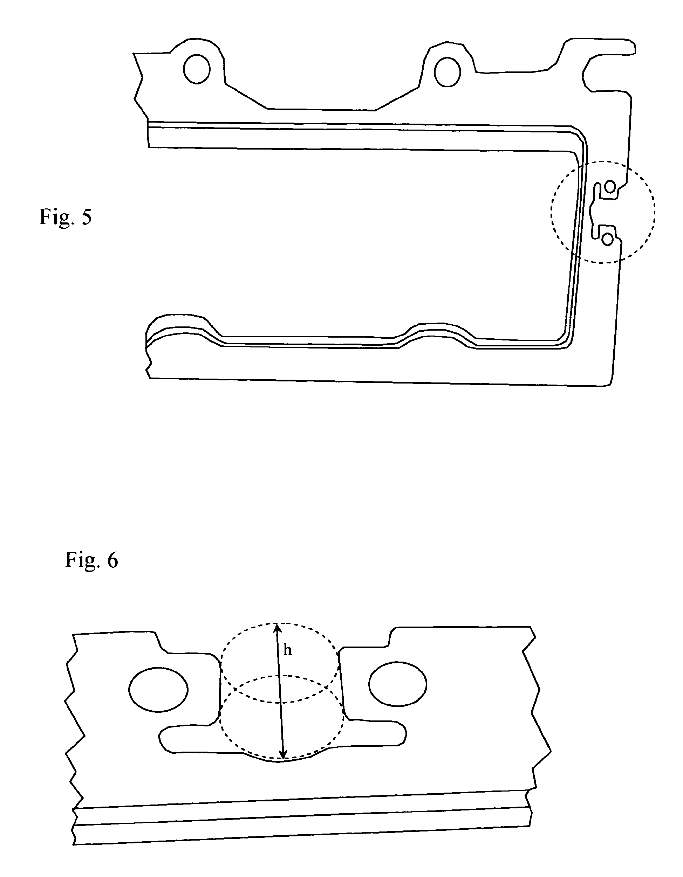

In Figur 5 ist ein größerer Ausschnitt einer erfindungsgemäßen Dichtung gezeigt, wobei eine Fixieraussparung wie in der Figur 1 oder 2 gezeigt im gestrichelten Kreis vorgesehen ist. Bei einer solchen Dichtung kann eine zweite Fixieraussparung (im hier nicht gezeigten linken Teil) vorgesehen sein, um eine Zwei-Punkt-Fixierung zu erreichen. Die zweite Fixieraussparung kann so ausgerichtet sein, dass die Verschiebbarkeit derjenigen der gezeigten Fixieraussparung entspricht. Alternativ ist aber auch eine 90°-Anordnung der Verschiebbarkeit zweier Fixieraussparungen möglich.

Es ist anzumerken, dass im Falle von einseitig offenen Fixieraussparungen keine Länge *h* gegeben ist, die von zwei Seiten durch die Blechlage begrenzt wird, da die Aussparung auf einer Seite keine Begrenzung aufweist. In diesem Fall ist die Länge *h* entsprechend der Erfindung so zu verstehen, dass sie die Länge angibt, auf der ein entsprechendes Zentrierelement innerhalb der Aussparung verschiebbar ist, dabei aber gleichzeitig seitlich geklemmt werden kann.

Dies ist beispielhaft in der Figur 6 erläutert. Im Falle der hier gezeigten einseitig offenen Aussparung ist (für ein kreiszylindrisches Zentrierelement) die Länge *h* bestimmt durch den Abstand zwischen dem untersten Punkt des Zentrierelements, wenn das Zentrierelement maximal nach unten versetzt ist, und dem höchsten Punkt des Zentrierelements, wenn das Zentrierelement soweit wie möglich nach oben versetzt ist, dabei aber noch in der Fixieraussparungen geklemmt wird.

## Patentansprüche

1. Flachdichtung, umfassend:
- mindestens eine Blechlage (2), die mindestens eine Durchgangsöffnung aufweist; **dadurch gekennzeichnet, dass** die Flachdichtung weiter umfasst
- mindestens eine T-förmige Fixieraussparung (4) für ein Zentrierelement (10), wobei die Breite (b) innerhalb des Stamms der T-Form geringer als die entsprechende Außenbreite des Zentrierelements (10) ist, und wobei die Länge (h) der Fixieraussparung (4) in Richtung des Stamms der T-Form größer als die entsprechende Außenbreite des Zentrierelements (10) ist; und
- mindestens je eine Aussparung (6) seitlich des Stamms der T-Form;
wobei die Fixieraussparung (4) mit den Armen (4') der T-Form dem Rand der mindestens einen Durchgangsöffnung zugewandt ist.

2. Flachdichtung gemäß Anspruch 1, wobei der Abstand der mindestens einen Fixieraussparung (4) von der Durchgangsöffnung nicht größer als die Breite innerhalb des Stamms der T-Form ist.

3. Flachdichtung gemäß einem der vorherigen Ansprüche, wobei die Fixieraussparung (4) an den Armen (4') der T-Form eine Wellen- oder Zickzackstruktur (12) aufweist.

4. Flachdichtung gemäß einem der vorherigen Ansprüche, wobei die Fixieraussparung (4) nach außen geschlossen ist, und wobei die mindestens eine Fixieraussparung (4) am Fuß der T-Form zwei weitere Arme (4") aufweist.

5. Flachdichtung gemäß einem der vorherigen Ansprüche, wobei die mindestens eine Fixieraussparung (4) am Fuß der T-Form nach außen offen ist.

6. Flachdichtung gemäß einem der vorherigen Ansprüche, umfassend mindestens zwei der Fixieraussparungen (4), wobei die Stämme der jeweiligen T-Form parallel zueinander

7. Flachdichtung gemäß Anspruch 6, wobei die Seite der Arme (4') der jeweiligen T-Form von mindestens zwei der Fixieraussparungen (4) entgegengesetzt ausgerichtet sind.

8. Flachdichtung gemäß einem der vorherigen Ansprüche, weiter umfassend eine Dichtsicke (8), welche die mindestens eine Durchgangsöffnung geschlossen umgibt.

## Claims

1. Flat gasket, comprising:
- at least one sheet layer (2) which comprises at least one through-hole; **characterized in that** the flat gasket further comprises
- at least one T-shaped fixation cut-out (4) for a centering element (10), wherein the width (b) within the stem of the T-shape is less than the corresponding outer width of the centering element (10), and wherein the length (h) of the fixation cut-out (4) in the direction of the stem of the T-shape is greater than the corresponding outer width of the centering element (10); and
- at least a respective cut-out (6) laterally with respect to the stem of the T-shape;
wherein the fixation cut-out (4) faces the edge of the at least one through-hole with the arms (4') of the T-shape.

2. Flat gasket according to claim 1, wherein the distance between the at least one fixation cut-out (4) and the through-hole does not exceed the width within the stem of the T-shape.

3. Flat gasket according to one of the preceding claims, wherein the fixation cut-out (4) has a wave or zig zag structure (12) at the arms (4') of the T-shape.

4. Flat gasket according to one of the preceding claims, wherein the fixation cut-out (4) is closed to the outside, and wherein the at least one fixation cut-out (4) has two further arms (4") at the foot of the T-shape.

5. Flat gasket according to one of the preceding claims, wherein the at least one fixation cut-out (4) is open to the outside at the foot of the T-shape.

6. Flat gasket according to one of the preceding claims, comprising at least two of the fixation cut-outs (4), wherein the stems of the respective T-shape are arranged parallel with respect to each other.

7. Flat gasket according to claim 6, wherein the side of the arms (4') of the respective T-shape of at least two of the fixation cut-outs (4) are oriented in opposite directions.

8. Flat gasket according to one of the preceding claims, further comprising a sealing bead (8) which surrounds the at least one through-hole in a closed manner.

## Revendications

1. Joint d'étanchéité plat, comprenant :
- au moins une couche de tôle (2), qui présente au moins une ouverture traversante ; **caractérisé en ce que** le joint d'étanchéité plat comprend en outre
- au moins une cavité de fixation en forme de T (4) pour un élément de centrage (10), dans lequel la largeur (b) à l'intérieur de la tige de la forme de T est plus petite que la largeur extérieure correspondante de l'élément de centrage (10), et dans lequel la longueur (h) de la cavité de fixation (4) dans la direction de la tige de la forme de T est plus grande que la largeur extérieure correspondante de l'élément de centrage (10) ; et
- au moins une cavité (6) latéralement à la tige de la forme de T ;
dans lequel la cavité de fixation (4) avec les bras (4') de la forme de T est tournée vers le bord d'au moins une ouverture traversante.

2. Joint d'étanchéité la selon la revendication 1, dans lequel l'espacement d'au moins une cavité de fixation (4) par rapport à l'ouverture traversante n'est pas plus grand que la largeur à l'intérieur de la tige de la forme de T.

3. Joint d'étanchéité plat selon une des revendications précédentes, dans lequel la cavité de fixation (4) présente sur les bras (4') de la forme de T une structure en forme ondulée ou de zigzag (12).

4. Joint d'étanchéité plat selon une des revendications précédentes, dans lequel la cavité de fixation (4) est fermée vers l'extérieur et dans lequel au moins une cavité de fixation (4) présente deux bras supplémentaires (4") au pied de la forme de T.

5. Joint d'étanchéité plat selon une des revendications précédentes, dans lequel au moins une cavité de fixation (4) au pied de la forme de T est ouverte vers l'extérieur.

6. Joint d'étanchéité plat selon une des revendications précédentes, comprenant au moins deux des cavités de fixation (4), dans lequel les tiges de la forme de T respective sont disposées parallèlement les unes aux autres.

7. Joint d'étanchéité plat selon la revendication 6, dans lequel les côtés des bras (4') de la forme de T respective sont alignés en sens opposé à au moins deux des cavités (4) de fixation.

8. Joint d'étanchéité plat selon une des revendications précédentes, comprenant en outre une moulure d'étanchéité (8), qui entoure de manière fermée au moins une ouverture traversante.
